# EUROPÄISCHE PATENTSCHRIFT

(11) **EP 4 549 823 B1**
(45) Veröffentlichungstag und Bekanntmachung des Hinweises auf die Patenterteilung: **02.12.2026**
(21) Anmeldenummer: 24208277.4
(22) Anmeldetag: 23.10.2024
(51) Int. Cl.: F24D 19/08, F24F 11/36, F24H 15/12, F24H 15/238, F24H 15/375

(54) **VERFAHREN ZUR ERKENNUNG VON GASBLASEN IN EINER WÄRMEPUMPE UND WÄRMEPUMPE**
METHOD FOR DETECTING GAS BUBBLES IN HEAT PUMP AND HEAT PUMP
PROCÉDÉ DE DÉTECTION DE BULLES DE GAZ DANS UNE POMPE À CHALEUR ET POMPE À CHALEUR

(30) Priorität: 02.11.2023 DE 102023130317
(43) Veröffentlichungstag der Anmeldung: 07.05.2025
(73) Patentinhaber: Stiebel Eltron GmbH & Co. KG, 37603 Holzminden (DE)
(72) Erfinder: Wojciechowski, Thorsten, 37603 Holzminden (DE)

(56) Entgegenhaltungen:
- EP-A1- 4 194 769
- US-A1- 2011 314 929

## Beschreibung

Die Erfindung betrifft ein Verfahren zur Erkennung von Gasblasen in einer Wärmepumpe und eine zugehörige Wärmepumpe.

Wärmepumpen sind bekannt. Eine Wärmepumpe ist eine Kraftwärmemaschine, die unter Aufwendung technischer Arbeit thermische Energie aus einem Reservoir mit niedrigerer Temperatur (in der Regel ist das die Umgebung) aufnimmt und - zusammen mit der Antriebsenergie - als Nutzwärme mit höherer Temperatur auf ein zu beheizendes System überträgt. Bekannt sind insbesondere Wärmepumpen, die als Wärmepumpenheizung eingesetzt werden.

Kern der Wärmepumpe ist ein Kältekreis, in dem ein Kältemittel in einem geschlossenen Kreislauf bewegt wird und dabei nacheinander verschiedene Aggregatzustandsänderungen erfährt. Gasförmiges Kältemittel wird durch einen Kompressor komprimiert (verdichtet). Im folgenden Wärmeübertrager (Verflüssiger) kondensiert (verflüssigt) es unter Wärmeabgabe. Anschließend wird das flüssige Kältemittel aufgrund der Druckänderung über eine Drossel, zum Beispiel ein Expansionsventil oder ein Kapillarrohr, entspannt. Im nachgeschalteten zweiten Wärmeübertrager (Verdampfer) verdampft das Kältemittel unter Wärmeaufnahme bei niedriger Temperatur (Siedekühlung). Der Kreislauf kann nun von vorne beginnen. Der Prozess muss von außen durch Zufuhr von mechanischer Arbeit (Antriebsleistung) über den Kompressor in Gang gehalten werden.

Bei Verwendung von brennbaren Kältemitteln, insbesondere Kohlenwasserstoffen wie C3H8 (R290, Propan) ist jedoch die Problematik erkannt worden, dass durch einen Defekt, zum Beispiel durch einen allgemeinen Defekt, Korrosion oder einen Defekt durch gefrierendes Wasser, am Wärmeübertrager, der zum Beispiel als Plattenwärmeübertrager ausgestaltet sein kann, Kältemittel in den Sekundärkreis, insbesondere einen Heizbereich des Sekundärkreises, eintreten kann, welches anschließend über das Verteilsystem des Sekundärkreises in ein Haus, das mit dem Heizbereich geheizt wird, gelangen und dort über Automatikentlüfter oder Ablassventile austreten kann. Bei Verwendung von Propan als Kältemittel, das einem brennbaren Kältemittel entspricht, kann dann zusammen mit der Raumluft ein zündfähiges Gemisch entstehen, welches dann eine Gefahr für das Haus darstellt.

In der EP 4 194 769 A1 wird eine Kältemittelanlage beschrieben mit einem Kältekreislauf, mit einem Anlagengehäuse, welches im installierten Zustand in einem Aufstellraum aufgestellt ist und in dem zumindest mehrere Komponenten des Kältekreislaufes sowie weitere Komponenten, wie hydraulische oder elektrische Komponenten angeorndet sind, wobei innerhalb des Anlagengehäuses ein abgedichtetes Kontrollgehäuse angeordnet ist, in dem die Komponenten Verdichter, Expansionsventil und zumindest einer und vorzugsweise beide Wärmetauscher des Kältekreislaufes angeordnet sind, wobei weiterhin am Kontrollgehäuse eine Ableitung zum Ableiten von Gas aus dem Kontrollvolumen angeschlossen ist, die in vorzugsweise dauerhaft offener Strömungsverbindung mit einem Außenbereich außerhalb des Aufstellraums steht. Es kann in einem Hydraulikkreis ein Leckdetektor vorgesehen sein, wie ein Sensor nach dem Prinzip der Karmanschen Wirbelstraße.

In der US 2011/0314929 A1 wird ein Verfahren zum Überwachen und/oder Messen eines zumindest zeitweise in einer Rohrleitung strömenden zweiphasigen Mediums beschrieben, das eine erste Phase, insbesondere eine gasförmige erste Phase, mit einer ersten Dichte und eine zweite Phase, insbesondere eine flüssige zweite Phase, mit einer von der ersten Dichte verschiedenen zweiten Dichte aufweist. Das Verfahren wird mit einer Wirbelströmungsmessvorrichtung durchgeführt, die mindestens ein in die Rohrleitung eingeführtes Messrohr, einen Blöckkörper und einen Wirbelsensor aufweist. In diesem Fall umfasst der Wirbelsensor einen Druckfluktuationen reagierenden, empfindlichen Abschnitt, der zumindest teilweise an die Wandung des Messrohrs angrenzend angeordnet ist. Bei dem Verfahren wird eine Wandströmung einer zweiten Phase eines zwei- oder mehrphasigen Mediums durch die Wirbelströmungsmessvorrichtung erfasst, wenn ein Messsignal a a, das charakteristische Merkmale für eine Wechselwirkung einer Wandströmung der zweiten Phase eines entlang einer Wand des Messrohrs strömenden Mediums mit dem empfindlichen Abschnitt des ersten Wirbelsensors enthält, durch den Wirbelsensor registriert wird.

DE 102 31 692 A1 beschreibt ein Verfahren zur Erkennung von Luft in der Wasserströmung eines elektrischen Durchlauferhitzers, insbesondere Blankdraht-Durchlauferhitzers, wobei der Verlauf eines Durchflusssignals eines Durchflussmessers von einer Steuerelektronik überwacht wird und bei erkannter Luft der Durchlauferhitzer abgeschaltet wird, dadurch gekennzeichnet, dass das Durchflusssignal innerhalb einer oder mehrerer bestimmten Zeitspannen auf seine Höhe und auf die Vorzeichen seiner Steigungen überwacht wird.

Es wird davon ausgegangen, dass das in DE 102 31 692 A1 beschriebene Verfahren eine zu geringe Sensitivität zeigt und den Austritt von beispielsweise Propangas aus dem Kältemittelkreis nicht zuverlässig ermitteln lässt.

Vor diesem Hintergrund war es eine Aufgabe der vorliegenden Erfindung, die Detektion von Gasblasen insbesondere in Wärmepumpensystemen zu verbessern. Jedenfalls war es eine Aufgabe, eine Alternative zu den bekannten Verfahren zu finden.

In einem ersten Aspekt wird ein Verfahren zur Erkennung von Gasblasen in einer Fluidströmung eines Sekundärkreises eines Wärmepumpensystems, umfassend die folgenden Schritte vorgeschlagen: Überwachen eines Frequenzsignals eines Durchflusssensors, wobei der Durchflusssensor als Vortex-Durchflusssensor ausgebildet und in dem Sekundärkreis angeordnet ist, und Schalten der Wärmepumpe in einen sicheren Zustand, wenn Gasblasen mittels des überwachten Frequenzsignals des Durchflusssensors erkannt werden, wobei das Überwachen des Frequenzsignals das Überwachen wenigstens eines, vorzugsweise mehrerer und besonders bevorzugt sämtlicher der folgenden Signalparameter umfasst: ein Tastverhältnis, ein Überschreiten einer Maximalfrequenz und ein Frequenzsprung oberhalb eines Schwellenwertes.

Es hat sich also herausgestellt, dass über geschickte Auswertung der Signale eines Vortex-Durchflusssensors, der zur Bestimmung eines Durchflusses bekannt ist, auch das Vorhandensein von Gasblasen detektierbar ist. Insbesondere ist es eine Erkenntnis der Erfinder der vorliegenden Erfindung, dass sogar für bei einigen Sensoren außerhalb des Betriebsbereich des Vortex-Durchflusssensors liegende Messwerte indikativ dafür sind, dass Gasblasen vorhanden sind.

Hierfür wird das Frequenzsignal, das indikativ für den Durchfluss ist, überwacht. Als Werte für das erfindungsgemäße Erkennungssignal für das Vorhandensein von Gasblasen wird ein Überschreiten einer Maximalfrequenz und/oder von Frequenzsprüngen oder das Tastverhältnis herangezogen.

Erfindungsgemäß erfährt der Vortex-Durchflusssensor also eine Funktionsintegration und es wird zusätzlich zu den bekannten Funktionen, nämlich der Durchfluss- oder Volumenstrommessung, eine weitere Funktion integriert, nämlich die Erkennung von Gasblasen.

Gegenüber Flügelrädern haben Vortex-Durchflusssensoren den Vorteil, dass kein sich drehendes Flügelrad, das beispielsweise Verschleiß ausgesetzt ist und Ungenauigkeiten aufgrund der Rotationsbewegung im Messsignal aufweist, verwendet wird. Ebenso unterscheiden sich die Lösungen in der Geräuscherkennung, da Flügelräder verglichen mit Vortex-Durchflusssensoren mehr Geräusche verursachen.

Vorzugsweise ist in dem Sekundärkreis eine erste Absperreinrichtung angeordnet und das Schalten der Wärmepumpe in den sicheren Zustand das teilweise oder vollständige Schließen der ersten Absperreinrichtung umfasst, so dass das Entweichen der Gasblasen aus dem Heizkreis unterbunden ist.

Vorzugsweise umfasst das Erkennen von Gasblasen die folgenden Schritte: Bestimmen oder Festlegen eines Mittelwerts des Tastverhältnisses und einer Fehlertoleranz des Tastverhältnisses; Erkennen eines Ausreißer-Tastverhältnisses, wenn das überwachte Frequenzsignal um mehr als die Fehlertoleranz von einem Erwartungswert, beispielsweise einem Bestimmten oder Bereitgestellten Mittelwert des Tastverhältnisses, abweicht, und Erkennen von Gasblasen, wenn während einem vorbestimmten Zeitraum eine vorgegebene Anzahl von erkannten Ausreißer-Tastverhältnissen und/oder eine Rate von erkannten Ausreißer-Tastverhältnissen überschritten wird.

In Ausführungen kann der Mittelwert oder Erwartungswert physikalisch von vornhinein bekannt und festgelegt sein, zum Beispiel durch Labormessungen. In anderen Ausführungen kann der Mittelwert im Einsatz an dem Gerät bestimmt werden.

Ein messtechnisch bestimmter Mittelwert, der als Erwartungswert verwendet wird, wird vorzugsweise innerhalb eines vorbestimmten Messzeitraums oder kontinuierlich bestimmt. Beispielsweise kann der Mittelwert immer für einen vorherigen Messzeitraum bestimmt werden. Alternativ kann der Mittelwert auch von der Steuerung aufgrund von einem Betriebspunkt der Wärmepumpe vorbestimmt sein, beispielsweise auf 50% des Maximalwertes vorbestimmt sein.

Der vorbestimmte Messzeitraum beträgt vorzugsweise zwischen 1 Sekunde und 5 Minuten. Besonders bevorzugt beträgt der Messzeitraum zwischen 1 Sekunde und 2 Minuten. Damit wird eine hinreichende zeitliche Auflösung und gleichzeitig eine hinreichende statistische Zuverlässigkeit ermöglicht.

Anders ausgedrückt ist in Ausführungsformen bevorzugt, dass das Erkennen von Gasblasen durch das Überwachen des Frequenzsignals unter Verwendung einer oder mehrerer bestimmter Zeitspannen, TM, erfolgt. Innerhalb der bestimmten Zeitspanne TM wird die Abweichung des Tastverhältnisses DG vom Mittelwert DM überwacht, vorzugsweise mit einer bidirektionalen Fehlertoleranz DFT, sodass ein Überschreiten des Betrages des Tastverhältnisses |DG| > DM + DFT zum Inkrementieren eines Zählers ND führt und dass, wenn innerhalb der Zeitspanne TM ein vorgegebene Zählerstand NDMAX überschritten wird, dass Sicherheitssystem anspricht und die Wärmepumpe in den sicheren Zustand schaltet und das, wenn der Zählerstand NDMAX nicht erreicht wird, der Zähler ND zurückgesetzt wird, sodass das Sicherheitssystem nicht aktiviert wird und eine neue zeitdiskrete Messung startet. Alternativ kann der Zähler zyklisch und insbesondere parallel dekrementiert werden. Maximal aber bis der Zähler ND gleich Null ist.

Vorzugsweise umfasst das Erkennen von Gasblasen die folgenden Schritte: Bereitstellen einer Schwellenfrequenz für einen Normalbetrieb des Durchflusssensors; Erkennen einer Ausreißer-Frequenz, wenn eine erkannte Frequenz des überwachten Frequenzsignaln die Schwellenfrequenz überschreitet; und Erkennen von Gasblasen, wenn während einem vorbestimmten Zeitraum eine vorgegebene Anzahl von erkannten Ausreißer-Frequenzen und/oder eine Rate von erkannten Ausreißer-Frequenzen überschritten wird. Die Fehlertoleranz ist insbesondere durch eine im System maximal mögliche Volumenstrom- und damit Frequenzänderung bestimmt.

Anders ausgerückt ist in Ausführungsformen bevorzugt, dass innerhalb der Zeitspanne TM die Sensorfrequenz fS überwacht wird und dass, wenn diese den vom Sensoraufbau physikalisch abhängigen Schwellwert des Normalbetriebes fsmax überschreitet, ein Zählers Nf inkrementiert wird und dass, wenn innerhalb der Zeitspanne TM ein vorgegebene Zählerstand NfMAX überschritten wird, das Sicherheitssystem anspricht und die Wärmepumpe in den sicheren Zustand schaltet und das, wenn der Zählerstand NfMAX nicht erreicht wird, der Zähler Nf zurückgesetzt wird, sodass das Sicherheitssystem nicht aktiviert wird und eine neue zeitdiskrete Messung startet. Alternativ kann der Zähler zyklisch und insbesondere parallel dekrementiert werden. Maximal aber wie oben ausgeführt bis der Zähler ND gleich Null ist.

Vorzugsweise umfasst das Erkennen von Gasblasen die folgenden Schritte: Bestimmen eines Mittelwerts einer Messfrequenz des Frequenzsignals und einer zugehörigen Fehlertoleranz; Erkennen einer Ausreißer-Frequenz, wenn die Messfrequenz um mehr als die Fehlertoleranz von dem Mittelwert der Messfrequenz abweicht; und Erkennen von Gasblasen, wenn während einem vorbestimmten Zeitraum eine vorgegebene Anzahl von erkannten Ausreißer-Tastverhältnissen und/oder eine Rate von erkannten Ausreißer-Tastverhältnissen überschritten wird.

Anders ausgedrückt ist in Ausführungsformen bevorzugt, dass innerhalb der Zeitspanne TM ein Mittelwert favr des Sensorsignals gebildet wird, sodass die Abweichung der Messfrequenz fs vom Mittelwert favr überwacht wird, vorzugsweise mit einer bidirektionalen Fehlertoleranz fFT, sodass ein Überschreiten des Betrages der Messfrequenz |fs| > favr + fFT zum Inkrementieren eines Zählers Nfavr führt und dass, wenn innerhalb der Zeitspanne TM ein vorgegebene Zählerstand NfavrMAX überschritten wird, dass Sicherheitssystem anspricht und die Wärmepumpe in den sicheren Zustand schaltet und das, wenn der Zählerstand NfavrMAX nicht erreicht wird, der Zähler Nfavr zurückgesetzt wird, sodass das Sicherheitssystem nicht aktiviert wird und eine neue zeitdiskrete Messung startet. Alternativ kann der Zähler zyklisch und insbesondere parallel dekrementiert werden. Maximal aber bis der Zähler ND gleich Null ist

Die Möglichkeiten zur Erkennung von Gasblasen können in Ausführungsformen kombiniert werden, um eine höhere Erkennungssicherheit zu erreichen.

In einem weiteren Aspekt wird ein Wärmepumpensystem vorgeschlagen, mit: einem Primärkreis zur Führung eines Kältemittels, einem Sekundärkreis zur Führung von insbesondere Wasser, und einem Wärmeübertrager zum Übertragen von Wärme zwischen dem Kältemittel und dem Wasser, wobei der Sekundärkreis einen Durchflusssensor, der vorzugsweise als Vortex-Durchflusssensor ausgebildet ist, und eine erste Absperreinrichtung umfasst, wobei das Wärmepumpensystem dazu eingerichtet ist, Gasblasen in dem Sekundärkreis unter Verwendung des Durchflusssensors zu erkennen, und die Wärmepumpe beim Erkennen von Gasblasen in dem Sekundärkreis in einen sicheren Zustand zu schalten, in dem die Absperreinrichtung zum Verringern oder Stoppen des Durchflusses durch den Sekundärkreis angesteuert wird. Anstelle von Wasser können auch andere Flüssigkeiten in dem Sekundärkreis geführt werden, beispielsweise Glykol.

Vortex-Durchflusssensoren sind bevorzugt, aber auch andere Durchflusssensoren wie beispielsweise aus DE 102 31 692 A1 bekannt sind vorteilhaft einsetzbar.

Vorzugsweise erfolgt das Erkennen von Gasblasen gemäß einem erfindungsgemäßen Verfahren oder einer bevorzugten Ausführung davon.

Vorzugsweise ist der Durchflusssensor im Heizkreis dicht hinter dem Wärmeübertrager angeordnet, wobei bei einer dichten Anordnung ausschließlich Rohrleitungen zwischen Wärmeübertrager und Durchflusssensor vorhanden sind.

Vorzugsweise weist der Durchflusssensor einen Störkörper, der in einer durchflossenen Leitung des Sekundärkreis liegt, ein Piezoelement und eine elektrische Schaltung auf, wobei das Piezoelement dazu ausgebildet ist, Druckdifferenzen durch Wirbel, die von dem Störkörper verursacht sind, als Biegung aufzunehmen und in Ladungen umzusetzen, die durch die elektrische Schaltung in ein Messsignal umgesetzt werden.

Vorzugsweise setzt die elektrische Schaltung ein Frequenzsignal proportional zum Durchfluss um.

Vortex-Durchflusssensoren beruhen darauf, dass ein Störkörper in einer durchflossenen Leitung liegt. Wie beim Heck eines Autos entstehen hinter dem Störkörper Wirbel. Wirbel haben naturgemäß Druckdifferenzen. Diese Druckdifferenzen erzeugen eine Kraft, die auf ein Piezoelement im Störkörper wirkt und mechanisch biegt. Die Biegung erzeugt Ladung, wie beim piezoelektrischen Feuerzeuganzünders. Die Ladung wird durch eine elektronische Schaltung zu einem elektrischen Messsignal gewandelt. Hier vorzugsweise eine Frequenzsignal, proportional zum Durchfluss. Im Normalbetrieb ist das Messignal symmetrisch und begrenzt. Werden einem Fluid Gasblasen beigemengt, ändert sich dies. Das Tastverhältnis wird deutlich unsymmetrischer, es werden unrealistisch hohe Volumenströme und Volumenstromsprünge angezeigt, die sogar auch außerhalb der veröffentlichten Betriebsgrenzen zur Detektion von Volumenströmen liegen können.

In Ausführungsformen wird Innerhalb einer Periode TM die Anzahl der Anomalien gezählt. Beim Überschreiten eines Zählerschwellwertes wird ein Absperrventil aktiviert, welches die Wärmepumpe in den sicheren Modus schaltet. Das Zählen der Anomalien stellt eine Art Filter dar. Er verhindert, dass natürlich und selten auftretende Schwankungen zum Auslösen des Sicherheitssystems führen.

Vorzugsweise weist die erste Absperreinrichtung ein Ventil auf, wobei das Ventil insbesondere ein Magnetventil oder ein druckgesteuertes Absperrventil ist.

Vorzugsweise weist der Sekundärkreis ferner einen Gasabschneider auf, wobei der Gasabscheider ein Ablassventil umfasst, das ausgestaltet ist, ein Kältemittel und/oder Luft, das in den Gasabscheider gelangt, abzuführen.

Indem insbesondere die Absperreeinrichtung ein Strömen durch den Sekundärkreis verhindert, hat das in dem Sekundärkreis vorhandene Kältemittel hinreichend Zeit, um durch den Gasabscheider sicher aus dem Sekundärkreis ausgeleitet zu werden und nicht, was unerwünscht ist, unkontrolliert beispielsweise aus dem Heizungssystem austritt und dort eine entflammbare Umgebung schafft.

Vorzugsweise ist das Wärmepumpensystem dazu ausgestaltet, nach vollständiger Abführung des Kältemittels und/oder Luft aus dem Gasabscheider die erste Absperreinrichtung zu öffnen.

Vorzugsweise weist das Kältemittel ein Kältemittel mit Gefahrenpotential, insbesondere ein brennbares Kältemittel wie beispielsweise Propan, auf.

In einem weiteren Aspekt wird die Verwendung eines Durchflusssensors zur Gasblasenerkennung in einer Wärmepumpe, insbesondere in einem Sekundärkreis einer Wärmepumpe, vorgeschlagen.

In anderen Worten ist in Ausführungen bevorzugt, dass ein Gasblasen detektierender Sensor, insbesondere ein Vortex-Sensor, im Heizkreis einer Wärmepumpe angebracht ist, vorzugsweise so dicht wie technisch möglich hinter dem Wärmetauscher angebracht ist, und ein Messignal erzeugt, dass durch eine Elektronik ausgewertet wird und im Fehlerfall einen Aktor ansteuert, sodass die Gasblasen nicht aus dem Heizkreislauf entweichen können.

Ebenfalls ist in anderen Ausführungen bevorzugt, dass ein Aktor, vorzugsweise ein Absperrventil, so im Heizkreis angebracht ist, vorzugsweise hinter dem Sensor, dass im geschalteten Zustand die detektierten Gasblasen nicht aus dem Heizkreislauf entweichen können.

Ebenfalls ist in Ausführungen bevorzugt, dass innerhalb der Zeitspanne TM die beschriebenen Messverfahren beliebig kombinierbar sind.

Ebenfalls ist in Ausführungen bevorzugt, dass die Zeitspanne TM nicht fest, sondern abhängig vom Fehlerzähler NY ist, mit TM(NY), sodass sich die Auflösung der Messung über die Zeit an die Fehlerhäufigkeit anpassen kann.

Ebenfalls ist in Ausführungen bevorzugt, dass ein analoges Messsignal verwendet wird, dass durch den Mikrocontroller oder den Prozessor über allgemein gültige Rechenoperation im Frequenzbereich verarbeitet wird.

Ebenfalls ist in Ausführungen bevorzugt, dass ein analoges Messsignal verwendet wird, dass durch den Mikrocontroller oder den Prozessor über allgemein gültige Rechenoperation im Zeitbereich verarbeitet wird.

Ebenfalls ist in alternativen Ausführungen bevorzugt, dass ein beliebiger Volumenstromsensor verwendet wird, der das Auftreten von Gasblasen physikalisch in ein elektrisches Signal umwandelt.

Ebenfalls ist in alternativen Ausführungen bevorzugt, dass der Mikrocontroller oder Prozessor durch eine analoge oder diskrete digitale Verschaltung ersetzt wird.

Weitere Vorteile und bevorzugte Ausgestaltungen werden nachfolgend unter Verweis auf die beigefügten Figuren beschrieben. Hierbei zeigen:
- Fig. 1: eine schematische Darstellung zur Illustration eines ersten Ausführungsbeispiels des erfindungsgemäßen Wärmepumpensystems,
- Fig. 2: eine schematische Darstellung zur Illustration eines zweiten Ausführungsbeispiels des erfindungsgemäßen Wärmepumpensystems, und
- Fig. 3-6: schematisch Signalverläufe des Vortex-Durchflusssensors.

In den beiliegenden Zeichnungen sowie den Erläuterungen zu diesen Zeichnungen sind einander entsprechende bzw. in Beziehung stehende Elemente - soweit zweckdienlich - mit jeweils entsprechenden oder ähnlichen Bezugszeichen gekennzeichnet, auch wenn sie in unterschiedlichen Ausführungsbeispielen zu finden sind.

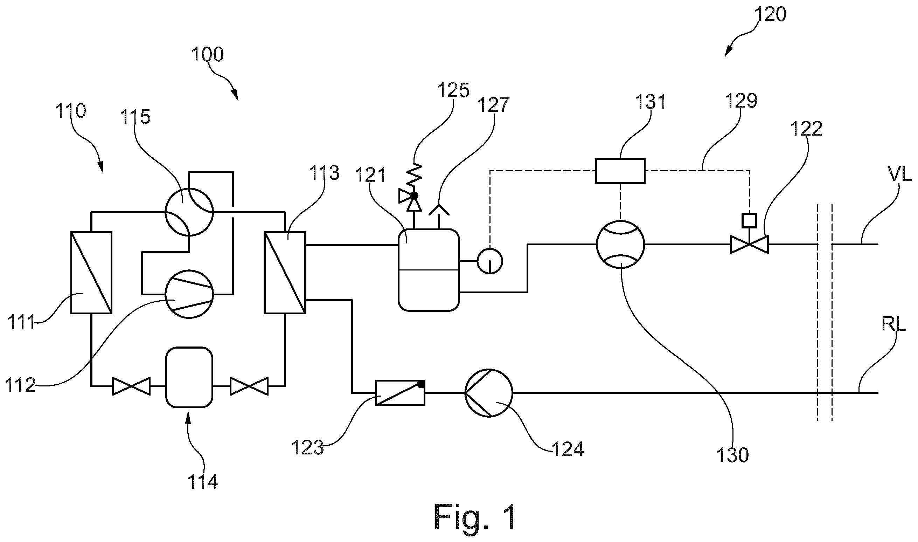

Fig. 1 zeigt eine schematische Darstellung zur Illustration eines ersten Ausführungsbeispiels des erfindungsgemäßen Wärmepumpensystems 100. Das Wärmepumpensystem 100 umfasst einen Primärkreis 110 und einen Sekundärkreis 120, wobei der Primärkreis 110 einen Kältemittel/Luft-Wärmeübertrager 111, zum Beispiel in Form eines Verdampfers, einen Verdichter 112, einen Kältemittel/Wasser-Wärmeübertrager 113, zum Beispiel in Form eines Verflüssigers, eine Expansionseinrichtung 114, zum Beispiel in Form eines Drosselorgans, und eine Kältekreisumkehreinrichtung 115 umfasst. Der Sekundärkreis 120 umfasst einen Gasabscheider 121 sowie eine erste Absperreinrichtung 122, eine zweite Absperreinrichtung 123 und eine Umwälzpumpe 124. Zusätzlich kann ein Sicherheitsüberdruckventil (nicht gezeigt) zwischen der ersten Absperreinrichtung 122 und der zweiten Absperreinrichtung 123 vorgesehen sein.

Der Sekundärkreis 120 ist nicht vollständig gezeigt, außerhalb des Wärmepumpensystems 120 schließt sich beispielsweise ein Heizungssystem oder ein Speichersystem zwischen einem Vorlauf VL und einem Rücklauf RL an.

Der Wärmeübertrager 113 entspricht einem Wärmeübertrager zum Übertragen von Wärme zwischen Kältemittel, das im Primärkreis 110 geführt wird, und Wasser, das im Sekundärkreis 120 geführt wird. Der Gasabscheider 121 umfasst in dieser Ausführung einen Schnellentlüfter 127 und ein Ablassventil 125 zum Abführen von Kältemittel aus dem Gasabscheider 121, wobei das Ablassventil 125 insbesondere bei (zu) hohem Druck, d.h. bei einem Druckwert, der einen Druckgrenzwert des Ablassventils 125 zum Öffnen entspricht oder diesen überschreitet, im Gasabscheider 121 geöffnet wird. Auch andere Ausgestaltungen des Gasabscheiders 121 sind vorteilhaft.

Das Wärmepumpensystem im Fall, dass der Wert für die Gasströmung den vordefinierten Schwellwert für die Gasströmung überschreitet, die erste Absperreinrichtung 122 zu schließen.

Die erste Absperreinrichtung 122 ist in der Ausführungsform aus Fig. 1 in einem Vorlaufbereich des Sekundärkreises 120, insbesondere in Strömungsrichtung des Wassers nach dem Gasabscheider 121, angeordnet. Die zweite Absperreinrichtung 123 ist in einem Rücklaufbereich des Sekundärkreises 120 angeordnet. Vorteilhafterweise ist die zweite Absperreinrichtung 123 ein Rückschlagventil.

Die erste Absperreinrichtung 122 ist über eine Steuerleitung 129 elektrisch oder alternativ pneumatisch mit einer Elektronik 131 verbunden. Die Elektronik 131 ist dazu ausgebildet, wenn Gasblasen in dem Sekundärkreis 120 erkannt werden, die erste Absperreinrichtung 122 zu schließen. Das Signal hierfür kann entweder von dem Gasabscheider 121 erhalten werden, und/oder erfindungsgemäß von einem Vortex-Durchflusssensor 130.

Ein in Wärmepumpen typisch eingesetzter Kältekreis 110, der vorzugsweise mittels eines brennbaren Kältemittels wie Propan betrieben wird, ist durch einen Wärmeübertrager 113 vom Heizkreis, dem Sekundärkreis 120, getrennt. Der Wärmeübertrager 113 kann durch einen Defekt, zum Beispiel dem Vereisen in der Kreislaufumkehr hervorgerufen, das brennbare Gas in den Heizkreis einleiten.

Das in diesem Fehlerfall in den Sekundärkreis 120 eindringende Gas kann mit einem Gasabscheider 121 herausgefiltert und durch einen Lüfter abgeführt werden, sodass eine Gefahrensituation durch ein brennbares oder explosives Gasgemisch vermieden wird.

In einer Ausführung ohne Abscheider/Entlüftung, oder vorzugsweise bei einem Defekt oder eines nicht filternden Arbeitszustandes dringen die Gasblasen weiter in den Sekundärkreis 120 ein. Die Gasblasen passieren den Volumenstrom-/Vortex-Durchflusssensor 130 und rufen Anomalien im Messignal hervor, die vorzugsweise durch das Prüfen des Signal-Tastverhältnisses, eines Überschreitens einer Maximalfrequenz und/oder von auftretenden zu großen Frequenzsprüngen, die nicht vom System im Normalbetrieb stammen können, oder einer beliebigen Kombination dieser Prüfverfahren ausgewertet werden.

Eine Elektronik 131, vorzugsweise mit Mikrocontroller oder Prozessor, wertet das Messignal des Vortex-Durchflusssensors 130 hinsichtlich der Anomalien aus und zählt die Anzahl der Anomalien, vorzugsweise zyklisch innerhalb der Torzeit *TM.* Nach dem Ablauf der Torzeit *TM* werden die Zähler zurückgesetzt, wobei vor dem Zurücksetzten geprüft wird, ob ein oder mehrere Zähler einen Grenzwert überschreiten, sodass beim Überschreiten eines Schwellwertes ein Fehler ausgelöst wird. Der detektierte Fehler zeigt das Vorhandensein von Gasblasen im Sekundärkreis 120 an, sodass die Wärmepumpe 100 in einen sicheren Zustand versetzt wird, was in diesem Beispiel einem Schließen der ersten Absperreinrichtung 122 entspricht.

Der sichere Zustand ist gegeben, durch das Sperren der ersten Absperreinrichtung 122, da die Gasblasen zwischen der ersten Absperreinrichtung 122 im Heizkreis und dem Wärmeübertrager 113 eingeschlossen werden.

Vorteil des erfindungsgemäßen Messverfahrens entsteht besonders dadurch, wenn es in der Kombination mit einem Vortex-Durchflusssensor 130 das Tastverhältnis des Messsignals überwacht. Dieses zeigt sich in Studien der Erfinder noch empfindlicher und genauer als eine Schwellwertüberschreitung oder eine Auswertung der Signalsteigung.

Vorteil bei der Verwendung eines Vortex-Durchflusssensors 130 allgemein ist seine hohe Empfindlichkeit, zum Beispiel im Hinblick auf ein Laufrad. Ein Vortex Sensor besitzt keine mechanisch beweglichen Teile im eigentlichen Sinne und unterliegt damit keiner Alterung, zum Beispiel durch Abnutzung von Lagern und Achsen. Auch eine Geräuschentwicklung findet nicht statt.

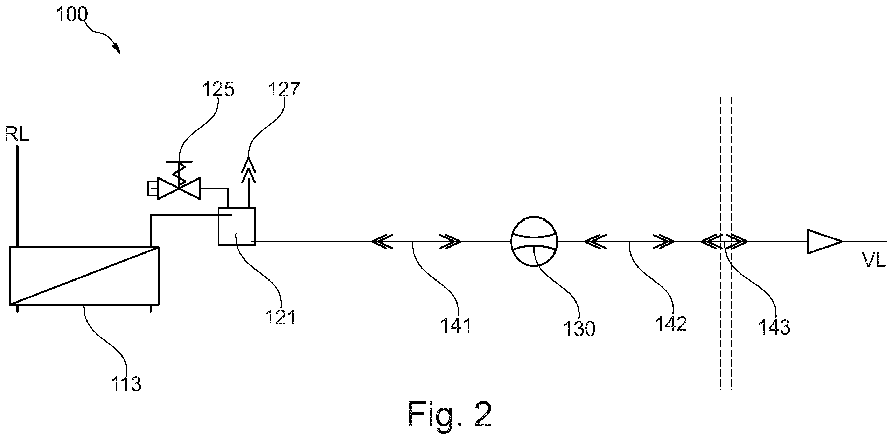

Fig. 2 zeigt schematisch und exemplarisch einen weiteren Aufbau einer Ausführung des erfindungsgemäßen Wärmepumpensystems 100. Die Auswerteelektronik des Vortex-Durchflusssensors 130 ist nicht gezeigt, hier ist fachmännisch eine beliebige der bekannten Umsetzungsmöglichkeiten vorgesehen.

Fig. 2 illustriert, wie beispielsweise eine Anordnung des Vortex-Durchflusssensors 130 "dicht" an dem Wärmeübertrager 113 ausgestaltet ist. Zwischen Wärmeübertrager 113 und Vortex-Durchflusssensor 130 ist lediglich der Gasabscheider 121 und ein Schlauch 141 angeordnet. Ferner ist zwischen dem Vortex-Durchflusssensor 130 und einer Kupplung 142 zum Anschluss beispielsweise des Heizungssystems an die Wärmepumpe 100 ebenfalls ein Schlauch 142 angeordnet. Damit ist eine sehr einfache Anordnung erreicht. Auch andere Ausgestaltungen sind hier natürlich möglich.

Das Signal bzw. die Frequenz des Vortex-Durchflusssensors 130 wird durch die Luftblasen/den Luftstrom beeinflusst.

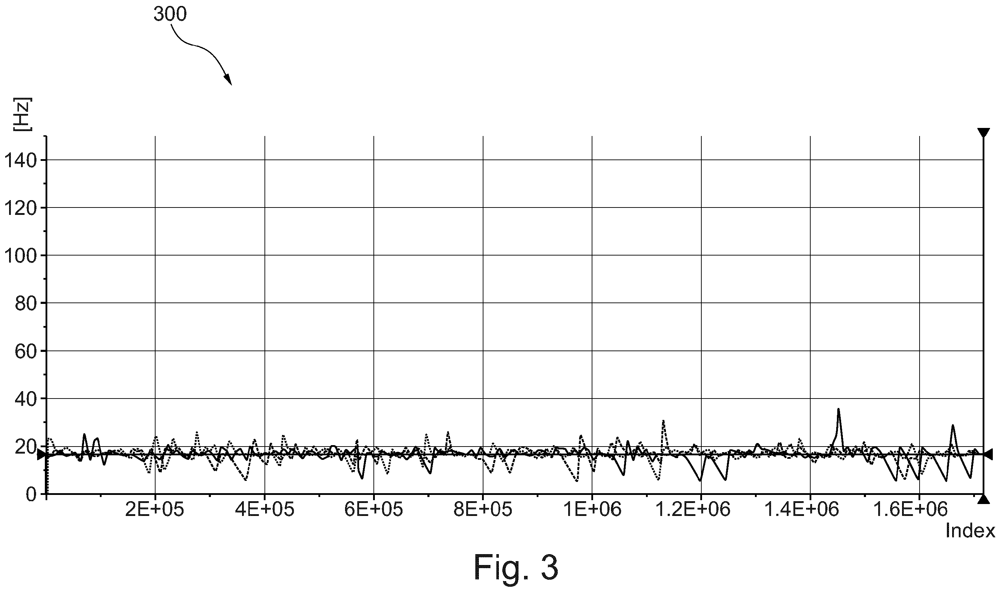

Unter Verweis auf die weiteren Figuren 3 bis 6 werden beispielhafte Werte gezeigt, die experimentell für einen gewählten Vortex-Durchflusssensor 130 erhalten wurden. Die Erfindung ist selbstverständlich nicht auf das Experiment und die daraus resultierenden Frequenzen beschränkt.

Die Erfindung macht sich die sprunghafte Änderung der Frequenz über der Zeit zu Nutze, um eine von verschiedenen Möglichen Logiken zu implementieren, welche zur Detektion von z.B. Propan eingesetzt werden könnte.

Untersucht man die Frequenzdaten der Laborversuche unter Berücksichtigung der Sensorkennwerte, so können für einen beispielhaften bestimmten Vortex-Durchflussensor 130 folgende Grundparameter angenommen werden.

Die Parameter unterscheiden sich natürlich zwischen den Vortex-Durchflusssensoren und sind als beispielhaft zu verstehen. Ein Fachmann (m/w/d) kann ohne Schwierigkeiten anhand von Datenblättern bzw. Messversuchen der jeweiligen Vortex-Durchflusssensoren für den Anwendungsfall passende Parameter auffinden.
Frequenzgang ohne Gasblasen: 14Hz(T≈71 ms) bis 227Hz(T≈4.4ms)
Frequenzmaximum mit Gasblasen: 3.6kHz(T≈277us)
Frequenzminimum mit Gasblasen: ≈0Hz
Frequenzband ohne Gasblasen: ±15Hz bis ±30Hz

Die im Fluid injizierten Gasblasen zeigen im Sensorsignal einen Frequenzbereich bis ungefähr ≈3500Hz und damit signifikant oberhalb der Frequenzen, die einen Durchfluss anzeigen. Anders ausgedrückt, Frequenzen deutlich oberhalb Frequenz für maximalen Volumenstrom sind nicht wie bisher allgemein angenommen ein Fehler des Sensors, sondern sie bieten eine zusätzliche Aussage, nämlich zeigen sie das vorhandensein von Gasblasen an.
f_{LaborGasblasen} [Hz]: 0-3500

Für den beispielhaft gewählten Sensor liegt der laut Datenblatt definierte Frequenzbereich des Sensors bei:
fₒᵤₜ [Hz]: 14-227

Für das Auswertekonzept wird der Arbeitsbereich daher wie folgt angesetzt, damit es sowohl den Durchflussbereich (14-227 Hz) als auch den Gasblasenbereich (bis 3500 Hz) abdeckt.
f_{Bandbreite} [Hz]: 14-3500

Aus den maximal gemessenen Frequenzen im Fehlerfall und den spezifizierten Frequenzen um Normalfall ergibt sich eine Fehlerschwelle. Die maximal erwartbare Frequenz unter Berücksichtigung von Toleranzen und Sicherheit liegt beispielsweise bei:
f_{MaxFTH} [Hz]: 250

Die maximal mögliche Frequenzänderung hängt vom der maximal möglichen Volumenstromänderung ab.

Fig. 3 zeigt schematisch und exemplarisch einen Signalverlauf 300 bei geringem Durchfluss ohne Gasblasen. Die Signalbandbreite ist in diesem Beispiel ±15 Hz um einen Mittelwert von 20 Hz.

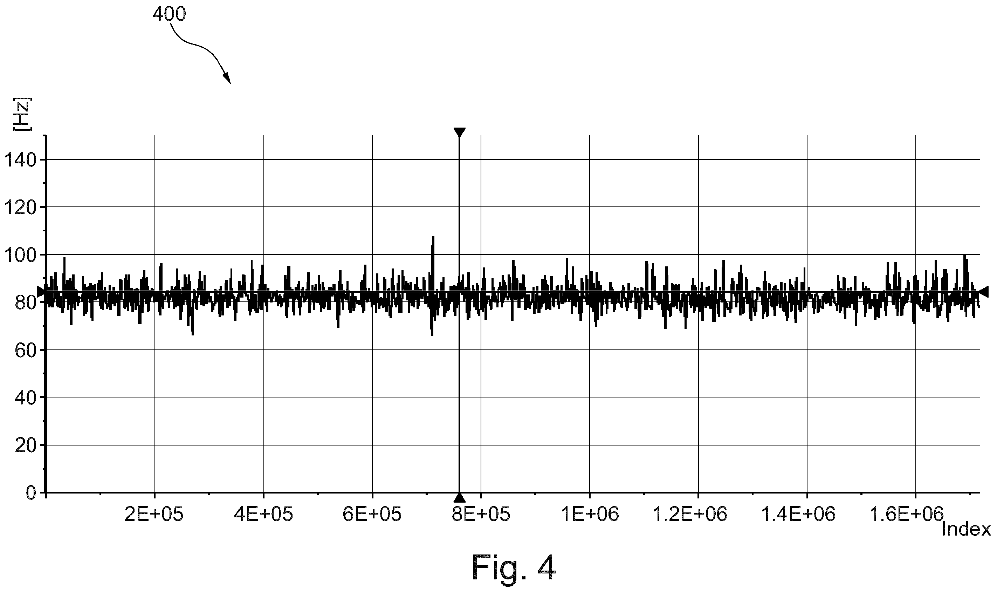

Fig. 4 zeigt schematisch und exemplarisch einen Signalverlauf 400 bei hohem Durchfluss ebenfalls ohne Gasblasen. Die Signalbandbreite ist in diesem Beispiel ±30 Hz um einen Mittelwert von 85 Hz.

Die zu erwartende Streuung des Frequenzbandes kann vorzugsweise wie folgt angesetzt werden:
Δf_{Max} [Hz]: ±30

Messungen zeigen ein bisher noch nicht beachtetes Verhalten. Der Eintrag von Gasblasen wirkt auf den piezoelektrischen Wandler des Vortex-Durchflusssensors 130 derart, dass er unsymmetrisch schwingt. Dies spiegelt sich in deutlichen Schwankungen des Tastverhältnises wider.

Vergleicht man die Sprünge im Tastverhältnis im Normalbetrieb und bei Gasblasen, so zeigen sich deutliche Unterschiede in der Schwankungsbandbreite. Hieraus ergibt sich in einem untersuchten Fall die maximale Schwankung des Tastgrades um den Mittelwert von 50% zu:
ΔD_{Max} [%]: ±10

In anderen Fällen, beispielsweise für andere Sensoren, kann ein Mittelwert auch anders liegen und auch andere Schwankungsbreiten sind vorstellbar.

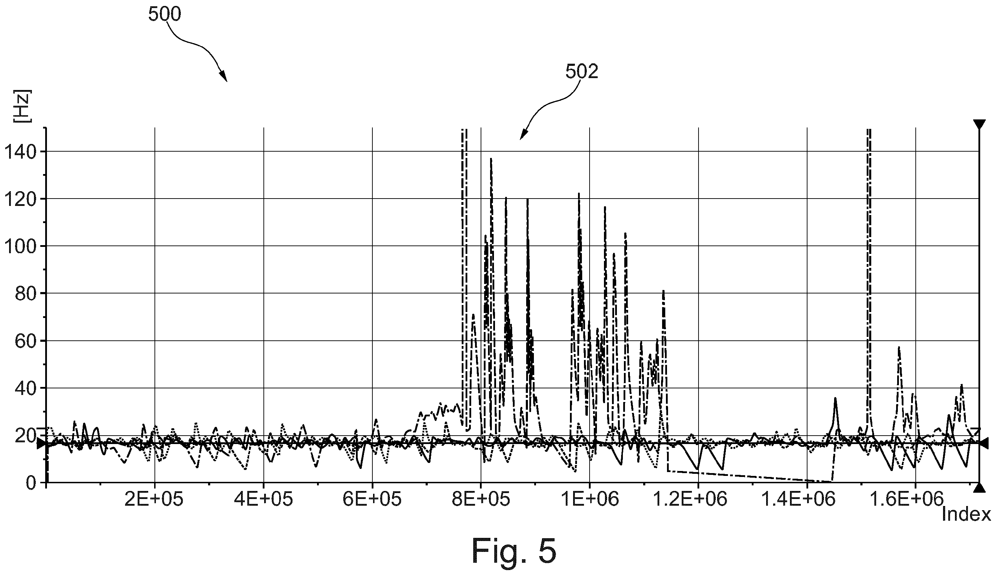

Fig. 5 zeigt schematisch und exemplarisch einen Signalverlauf 500 bei geringem Durchfluss. Zu einem Zeitpunkt 502 sind starke Ausschläge in dem Signalverlauf 500 sichtbar. Die gravierenden Frequenzausschläge mit über 150 Hz sind indikativ für eine zwischenzeitige leichte Luftzufuhr.

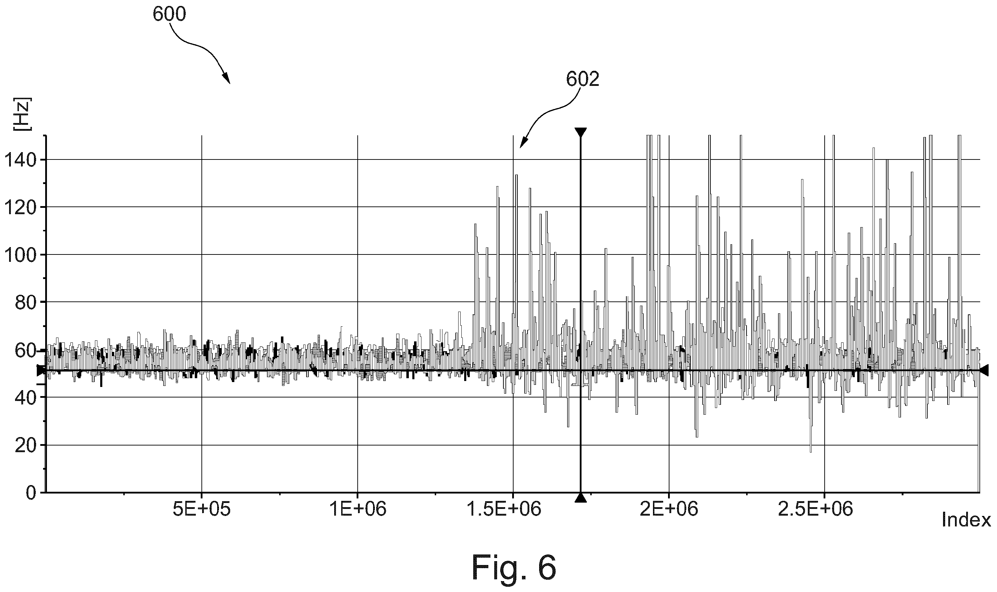

Fig. 6 zeigt schematisch und exemplarisch einen Signalverlauf 600 bei mittlerem Durchfluss. Zu einem Zeitpunkt 602 sind ebenfalls starke Ausschläge in dem Signalverlauf 600 sichtbar, die für eine zwischenzeitige leichte Luftzufuhr indikativ sind.

### Bezugszeichenliste

- 100: Wärmepumpensystems
- 110: Primärkreis
- 111: Kältemittel/Luft-Wärmeübertrager
- 112: Verdichter
- 113: Kältemittel/Wasser-Wärmeübertrager
- 114: Expansionseinrichtung
- 115: Kältekreisumkehreinrichtung
- 120: Sekundärkreis
- 121: Gasabscheider
- 122: erste Absperreinrichtung
- 123: zweite Absperreinrichtung
- 124: Umwälzpumpe
- 125: Ablassventil
- 127: Schnellentlüfter
- 129: Steuerleitung
- 130: Vortex-Durchflusssensor
- 131: Elektronik
- 141: Schlauch
- 142: Kupplung
- 400, 500, 600: Signalverlauf
- 502, 602: Zeitpunkt
- RL: Rücklauf
- TM: Torzeit
- VL: Vorlauf

## Patentansprüche

1. Verfahren zur Erkennung von Gasblasen in einer Fluidströmung eines Sekundärkreises (120) eines Wärmepumpensystems (100), umfassend die folgenden Schritte:
Überwachen eines Frequenzsignals eines Durchflusssensors, wobei der Durchflusssensor als Vortex-Durchflusssensor (130) ausgebildet und in dem Sekundärkreis (120) angeordnet ist, und
Schalten der Wärmepumpe in einen sicheren Zustand, wenn Gasblasen mittels des überwachten Frequenzsignals des Durchflusssensors erkannt werden,
wobei das Überwachen des Frequenzsignals das Überwachen wenigstens eines, vorzugsweise mehrerer und besonders bevorzugt sämtlicher der folgenden Signalparameter umfasst: ein Tastverhältnis, ein Überschreiten einer Maximalfrequenz und ein Frequenzsprung oberhalb eines Schwellenwertes.

2. Verfahren nach Anspruch 1, wobei in dem Sekundärkreis (120) eine erste Absperreinrichtung angeordnet ist und das Schalten der Wärmepumpe in den sicheren Zustand das teilweise oder vollständige Schließen der ersten Absperreinrichtung umfasst, so dass das Entweichen der Gasblasen aus dem Heizkreis unterbunden ist.

3. Verfahren nach einem der vorstehenden Ansprüche, wobei das Erkennen von Gasblasen die folgenden Schritte umfasst:
- Bereitstellen, insbesondere Bestimmen oder Festlegen, eines Erwartungswertes des Tastverhältnisses und einer Fehlertoleranz des Tastverhältnisses,
- Erkennen eines Ausreißer-Tastverhältnisses, wenn das überwachte Frequenzsignal um mehr als die Fehlertoleranz von dem bereitgestellten Erwartungswert des Tastverhältnisses abweicht,
- Erkennen von Gasblasen, wenn während einem vorbestimmten Zeitraum eine vorgegebene Anzahl von erkannten Ausreißer-Tastverhältnissen und/oder eine Rate von erkannten Ausreißer-Tastverhältnissen überschritten wird.

4. Verfahren nach einem der vorstehenden Ansprüche, wobei das Erkennen von Gasblasen die folgenden Schritte umfasst:
- Bereitstellen einer Schwellenfrequenz für einen Normalbetrieb des Durchflusssensors,
- Erkennen einer Ausreißer-Frequenz, wenn eine erkannte Frequenz des überwachten Frequenzsignals die Schwellenfrequenz überschreitet,
- Erkennen von Gasblasen, wenn während einem vorbestimmten Zeitraum eine vorgegebene Anzahl von erkannten Ausreißer-Frequenzen und/oder eine Rate von erkannten Ausreißer-Frequenzen überschritten wird.

5. Verfahren nach einem der vorstehenden Ansprüche, wobei das Erkennen von Gasblasen die folgenden Schritte umfasst:
- Bestimmen eines Mittelwerts einer Messfrequenz des Frequenzsignals und einer zugehörigen Fehlertoleranz, wobei die Fehlertoleranz insbesondere durch eine im System maximal mögliche Volumenstrom- und damit Frequenzänderung bestimmt ist,
- Erkennen einer Ausreißer-Frequenz, wenn die Messfrequenz um mehr als die Fehlertoleranz von dem Mittelwert der Messfrequenz abweicht,
- Erkennen von Gasblasen, wenn während einem vorbestimmten Zeitraum eine vorgegebene Anzahl von erkannten Ausreißer-Tastverhältnissen und/oder eine Rate von erkannten Ausreißer-Tastverhältnissen überschritten wird.

6. Wärmepumpensystem (100) mit:
einem Primärkreis (110) zur Führung eines Kältemittels, einem Sekundärkreis (120) zur Führung von Wasser, und einem Wärmeübertrager zum Übertragen von Wärme zwischen dem Kältemittel und dem Wasser,
wobei der Sekundärkreis (120) einen Durchflusssensor, der als Vortex-Durchflusssensor (130) ausgebildet ist, und eine erste Absperreinrichtung umfasst,
wobei das Wärmepumpensystem (100) dazu eingerichtet ist, Gasblasen in dem Sekundärkreis (120) unter Verwendung des Durchflusssensors gemäß einem Verfahren nach einem der Ansprüche 1 bis 5 zu erkennen, und die Wärmepumpe beim Erkennen von Gasblasen in dem Sekundärkreis (120) in einen sicheren Zustand zu schalten, in dem die Absperreinrichtung zum Verringern oder Stoppen des Durchflusses durch den Sekundärkreis (120) angesteuert wird.

7. Wärmepumpensystem (100) nach Anspruch 6, wobei der Durchflusssensor im Heizkreis dicht hinter dem Wärmeübertrager angeordnet ist, wobei bei einer dichten Anordnung ausschließlich Rohrleitungen zwischen Wärmeübertrager und Durchflusssensor vorhanden sind.

8. Wärmepumpensystem (100) nach Anspruch 6 oder 7, wobei der Durchflusssensor einen Störkörper, der in einer durchflossenen Leitung des Sekundärkreis (120) liegt, ein Piezoelement und eine elektrische Schaltung aufweist, wobei das Piezoelement dazu ausgebildet ist, Druckdifferenzen durch Wirbel, die von dem Störkörper verursacht sind, als Biegung aufzunehmen und in Ladungen umzusetzen, die durch die elektrische Schaltung in ein Messsignal umgesetzt werden.

9. Wärmepumpensystem (100) nach Anspruch 8, wobei die elektrische Schaltung ein Frequenzsignal proportional zum Durchfluss umsetzt.

10. Wärmepumpensystem (100) nach einem der vorherigen Ansprüche 6 bis 9, wobei die erste Absperreinrichtung ein Ventil aufweist, wobei das Ventil insbesondere ein Magnetventil, ein druckgesteuertes Absperrventil und/oder ein Motorventil ist.

11. Wärmepumpensystem (100) nach einem der vorherigen Ansprüche 6 bis 10, wobei der Sekundärkreis (120) ferner einen Gasabscheider aufweist, wobei der Gasabscheider ein Ablassventil (125) umfasst, das ausgestaltet ist, ein Kältemittel und/oder Luft, das in den Gasabscheider gelangt, abzuführen.

12. Wärmepumpensystem (100) nach Anspruch 11, wobei das Wärmepumpensystem (100) ausgestaltet ist, nach vollständiger Abführung des Kältemittels und/oder Luft aus dem Gasabscheider die erste Absperreinrichtung zu öffnen.

13. Wärmepumpensystem (100) nach einem der Ansprüche 6 bis 12, wobei das Kältemittel ein Kältemittel mit Gefahrenpotential, insbesondere ein brennbares Kältemittel wie beispielsweise Propan, aufweist.

## Claims

1. A method for detecting gas bubbles in a fluid flow within a secondary circuit (120) of a heat pump system (100), comprising the following steps:
Monitoring a frequency signal from a flow sensor, wherein the flow sensor is configured as a vortex flow sensor (130) and is arranged in the secondary circuit (120), and
Switching the heat pump to a safe state if gas bubbles are detected via the monitored frequency signal from the flow sensor,
wherein monitoring the frequency signal includes monitoring at least one, but ideally several, and most ideally all of the following signal parameters: a cycle ratio, exceedance of a maximum frequency, and a frequency jump above a threshold value.

2. The method according to claim 1, wherein there is an initial shut-off device in the secondary circuit (120) and switching the heat pump to the safe state includes partially or fully closing the initial shut-off device so that the escape of gas bubbles from the heating circuit is prevented.

3. The method according to any one of the preceding claims, wherein the detection of gas bubbles comprises the following steps:
- Providing, in particular determining or specifying, an expected value for the cycle ratio and an error tolerance for the cycle ratio,
- Detection of an outlier cycle ratio where the monitored frequency signal deviates by more than the error tolerance from the specified expected cycle ratio value,
- Detection of gas bubbles when, during a predetermined period, a specified number of detected outlier cycles ratios and/or a rate of detected outlier cycle ratios is exceeded.

4. The method according to any one of the preceding claims, wherein the detection of gas bubbles comprises the following steps:
- Setting a threshold frequency for normal operation of the flow sensor,
- Detection of an outlier frequency when a detected frequency of the monitored frequency signal exceeds the threshold frequency,
- Detection of gas bubbles when, during a predetermined period, a specified number of detected outlier frequencies and/or a rate of detected outlier frequencies is exceeded.

5. The method according to any one of the preceding claims, wherein the detection of gas bubbles comprises the following steps:
- Determining a mean value for the measurement frequency of the frequency signal and an associated error tolerance, where the error tolerance is determined, in particular, by the maximum possible change in volume flow - and thus in frequency - within the system,
- Detection of an outlier frequency, where the measurement frequency deviates by more than the error tolerance from the mean value for the measurement frequency,
- Detection of gas bubbles when, during a predetermined period, a specified number of detected outlier cycles ratios and/or a rate of detected outlier cycle ratios is exceeded.

6. Heat pump system (100) comprising:
a primary circuit (110) for conveying a refrigerant, a secondary circuit (120) for conveying water, and a heat exchanger for transferring heat between the refrigerant and the water,
wherein the secondary circuit (120) comprises a flow sensor, which is configured as a vortex flow sensor (130), and an initial shut-off device,
wherein the heat pump system (100) is configured to detect gas bubbles in the secondary circuit (120) using the flow sensor in accordance with a method as set out in any one of claims 1 to 5, and, upon detecting gas bubbles in the secondary circuit (120), to switch the heat pump to a safe state in which the shut-off device is actuated to reduce or stop the flow through the secondary circuit (120).

7. Heat pump system (100) according to claim 6, wherein the flow sensor is arranged in the heating circuit immediately downstream of the heat exchanger, such that, in a sealed arrangement, only pipework is present between the heat exchanger and the flow sensor.

8. Heat pump system (100) according to claim 6 or 7, wherein the flow sensor comprises a disruptor located in a pipe through which fluid flows in the secondary circuit (120), a piezoelectric element and an electrical circuit, the piezoelectric element being designed to detect pressure differentials caused by vortices generated by the obstruction as deflection and convert these into charges, which are then converted into a measurement signal by the electrical circuit.

9. Heat pump system (100) according to claim 8, wherein the electrical circuit converts a frequency signal proportional to the flow rate.

10. A heat pump system (100) according to one of the preceding claims 6 to 9, wherein the initial shut-off device comprises a valve, the valve being, in particular, a solenoid valve, a pressure-controlled shut-off valve and/or a motorised valve.

11. A heat pump system (100) according to any one of the preceding claims 6 to 10, wherein the secondary circuit (120) further comprises a gas separator, the gas separator comprising a drain valve (125) which is configured to discharge refrigerant and/or air entering the gas separator.

12. A heat pump system (100) according to claim 11, wherein the heat pump system (100) is configured to open the initial shut-off device after the refrigerant and/or air has been completely discharged from the gas separator.

13. A heat pump system (100) according to any one of claims 6 to 12, wherein the refrigerant comprises a potentially hazardous refrigerant, in particular a flammable refrigerant, such as propane.

## Revendications

1. Procédé de détection de bulles de gaz dans un écoulement de fluide d'un circuit secondaire (120) d'un système de pompe à chaleur (100), comprenant les étapes suivantes :
surveillance d'un signal de fréquence d'un capteur de débit, le capteur de débit étant conçu sous la forme d'un capteur de débit à vortex (130) et étant disposé dans le circuit secondaire (120), et
basculement de la pompe à chaleur vers un état de sécurité lorsque des bulles de gaz sont détectées au moyen du signal de fréquence surveillé du capteur de débit,
ladite surveillance du signal de fréquence comprenant la surveillance d'au moins un, de préférence de plusieurs et, de manière particulièrement préférée, de l'ensemble des paramètres de signal suivants : un rapport cyclique, un dépassement d'une fréquence maximale et un saut de fréquence dépassant une valeur seuil.

2. Procédé selon la revendication 1, dans lequel un premier dispositif d'arrêt est disposé dans le circuit secondaire (120), et le basculement de la pompe à chaleur vers l'état de sécurité comprend la fermeture partielle ou totale du premier dispositif d'arrêt, de manière à empêcher les bulles de gaz de s'échapper du circuit de chauffage.

3. Procédé selon l'une des revendications précédentes, dans lequel la détection de bulles de gaz comprend les étapes suivantes :
- mise à disposition, notamment détermination ou définition, d'une valeur attendue du rapport cyclique et d'une tolérance d'erreur relative au rapport cyclique,
- détection d'un rapport cyclique aberrant lorsque le signal de fréquence surveillé s'écarte de la valeur attendue du rapport cyclique mise à disposition de plus de la tolérance d'erreur,
- détection de bulles de gaz lorsqu'un nombre prédéfini de rapports cycliques aberrants détectés et/ou un taux de rapports cycliques aberrants détectés est dépassé au cours d'une période prédéfinie.

4. Procédé selon l'une des revendications précédentes, dans lequel la détection de bulles de gaz comprend les étapes suivantes :
- mise à disposition d'une fréquence seuil relative au fonctionnement normal du capteur de débit,
- détection d'une fréquence aberrante lorsqu'une fréquence détectée du signal de fréquence surveillé dépasse la fréquence seuil,
- détection de bulles de gaz lorsqu'un nombre prédéfini de fréquences aberrantes détectées et/ou un taux de fréquences aberrantes détectées est dépassé au cours d'une période prédéfinie.

5. Procédé selon l'une des revendications précédentes, dans lequel la détection de bulles de gaz comprend les étapes suivantes :
- détermination d'une valeur moyenne de la fréquence de mesure du signal de fréquence et d'une tolérance d'erreur associée, la tolérance d'erreur étant notamment déterminée par la variation maximale possible du débit volumique et, par conséquent, de la fréquence au sein du système,
- détection d'une fréquence aberrante lorsque la fréquence de mesure s'écarte de la valeur moyenne de la fréquence de mesure de plus de la tolérance d'erreur,
- détection de bulles de gaz lorsqu'un nombre prédéfini de rapports cycliques aberrants détectés et/ou un taux de rapports cycliques aberrants détectés est dépassé au cours d'une période prédéfinie.

6. Système de pompe à chaleur (100) comportant :
un circuit primaire (110) destiné à acheminer un fluide frigorigène, un circuit secondaire (120) destiné à acheminer de l'eau, et un échangeur de chaleur destiné à transférer de la chaleur entre le fluide frigorigène et l'eau,
ledit circuit secondaire (120) comprenant un capteur de débit, conçu sous la forme d'un capteur de débit à vortex (130), et un premier dispositif d'arrêt,
ledit système de pompe à chaleur (100) étant configuré pour détecter des bulles de gaz dans le circuit secondaire (120) au moyen du capteur de débit selon un procédé conforme à l'une des revendications 1 à 5, et, lors de la détection de bulles de gaz dans le circuit secondaire (120), pour faire basculer la pompe à chaleur vers un état de sécurité en activant le dispositif d'arrêt afin de réduire ou interrompre le débit dans le circuit secondaire (120).

7. Système de pompe à chaleur (100) selon la revendication 6, dans lequel le capteur de débit est disposé dans le circuit de chauffage à toute proximité derrière l'échangeur de chaleur, seules des conduites entre l'échangeur de chaleur et le capteur de débit étant présentes dans une disposition à toute proximité.

8. Système de pompe à chaleur (100) selon la revendication 6 ou 7, dans lequel le capteur de débit présente un obstacle situé dans une conduite du circuit secondaire (120) traversée par le fluide, un élément piézoélectrique et un circuit électrique, l'élément piézoélectrique étant conçu pour capter les différences de pression dues aux tourbillons provoqués par l'obstacle, sous forme de flexion et pour les convertir en charges, lesquelles sont ensuite transformées en un signal de mesure par le circuit électrique.

9. Système de pompe à chaleur (100) selon la revendication 8, dans lequel le circuit électrique convertit un signal de fréquence proportionnellement au débit.

10. Système de pompe à chaleur (100) selon l'une des revendications 6 à 9 précédentes, dans lequel le premier dispositif d'arrêt présente une vanne, la vanne étant notamment une électrovanne, une vanne d'arrêt commandée par la pression et/ou une vanne motorisée.

11. Système de pompe à chaleur (100) selon l'une des revendications 6 à 10 précédentes, dans lequel le circuit secondaire (120) présente en outre un séparateur de gaz, le séparateur de gaz comprenant une vanne de vidange (125) conçue pour évacuer le fluide frigorigène et/ou l'air pénétrant dans le séparateur de gaz.

12. Système de pompe à chaleur (100) selon la revendication 11, le système de pompe à chaleur (100) étant conçu pour ouvrir le premier dispositif d'arrêt après l'évacuation complète du fluide frigorigène et/ou de l'air hors du séparateur de gaz.

13. Système de pompe à chaleur (100) selon l'une des revendications 6 à 12, dans lequel le fluide frigorigène comprend un fluide frigorigène présentant un potentiel de risque, notamment un fluide frigorigène inflammable tel que le propane.
